(19) Europäisches Patentamt / European Patent Office / Office européen des brevets

(11) **EP 3 726 334 B1**

(12) **FASCICULE DE BREVET EUROPEEN**

(45) Date de publication et mention de la délivrance du brevet:
**06.11.2024 Bulletin 2024/45**

(21) Numéro de dépôt: **20169423.9**

(22) Date de dépôt: **14.04.2020**

(51) Classification Internationale des Brevets (IPC):
**G06F 1/16** *(2006.01)*    **G06K 7/10** *(2006.01)*
**H04M 1/725** *(2021.01)*    **H04W 4/80** *(2018.01)*
**H04W 4/02** *(2018.01)*

(52) Classification Coopérative des Brevets (CPC):
**G06F 1/1626; G06F 1/1684; G06K 7/10336;**
**H04M 1/72403; H04M 1/72412; H04W 4/023;**
**H04W 4/80;** H04M 2250/04; H04W 4/026

(54) **AFFICHAGE SUR UN ÉCRAN DE SMARTPHONE D'UN MOTIF DE POSITIONNEMENT D'UNE CARTE SANS CONTACT POUR AMÉLIORER LA COMMUNICATION EN CHAMP PROCHE**

ANZEIGUNG EINES POSITIONIERUNGSMUSTERS FUR EINE DRAHTLOSE CHIPKARTE AUF EINEM BILDSCHIRM EINES SMARTPHONES ZUR VERBESSERUNG DER NAHFELDKOMMUNIKATION

DISPLAY OF A POSITIONING PATTERN FOR A WIRELESS SMARTCARD ON A SMARTPHONE SCREEN TO IMPROVE THE NEAR FIELD COMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2019 FR 1903987**

(43) Date de publication de la demande:
**21.10.2020 Bulletin 2020/43**

(73) Titulaire: **IDEMIA France**
**92400 Courbevoie (FR)**

(72) Inventeurs:
- **DEPRUN, Jean-François**
  **92400 Courbevoie (FR)**
- **AUBIN, Yann-Loic**
  **92400 Courbevoie (FR)**

(74) Mandataire: **Simon, Géraldine Marie**
**Idemia France**
**2, Place Samuel de Champlain**
**92400 Courbevoie (FR)**

(56) Documents cités:
WO-A1-2014/116235    FR-A1- 3 061 333
US-A1- 2013 143 604

## Description

## Domaine technique

La présente invention concerne le domaine des communications en champ proche et plus particulièrement celui des cartes sans contact à communication en champ proche.

## Technique antérieure

Les communications en champ proche s'appuient généralement sur la technologie NFC (pour « Near Field Communication » définie dans la norme ISO/IEC 18092 ou NFC IP-1) ou la technologie ISO/IEC 14443. Les distances de communication sont de l'ordre de quelques centimètres, jusqu'à par exemple 10 cm, mais limitées à moins pour certaines applications (par exemple 3 cm pour des paiements sans contact).

Un nombre croissant d'applications requiert qu'une carte sans contact établisse une communication sans contact courte distance avec un dispositif mobile, tel un smartphone, une tablette, un terminal mobile, etc. Généralement la carte est placée à proximité du dispositif mobile, sur ou sous celui-ci. L'établissement de la communication en champ proche permet notamment à un lecteur sans contact (du dispositif mobile) d'alimenter la carte sans contact (dépourvue de batterie interne) ou de compléter l'alimentation de la carte (pourvue d'une batterie interne).

Par exemple le paiement sans contact : une carte de paiement sans contact est approchée du lecteur sans contact d'un smartphone dans lequel s'exécute un logiciel de paiement. Des communications s'établissent entre le logiciel et la carte alors alimentée aux fins de traiter les détails du paiement avant leur envoi par le smartphone à un serveur de paiement.

Dans une application de santé, de transport, de télécom ou plus généralement de stockage de données, la carte sans contact est approchée du lecteur sans contact d'un smartphone dans lequel s'exécute un logiciel de visualisation de données. Les communications sans contact entre le smartphone et la carte alors alimentée permettent à un professionnel d'accéder aux données du patient, de l'usager ou de l'abonné, selon le cas.

Lorsqu'une carte sans contact est équipée d'un capteur biométrique, par exemple d'empreinte digitale, la carte sans contact établit une communication sans contact avec le smartphone afin d'être alimentée. On parle de télé-alimentation. La carte sans contact peut alors être utilisée pour acquérir les empreintes digitales du porteur de carte à des fins de sécurisation.

Les empreintes peuvent être acquises lors d'un processus initial, dit d'« enrôlement », initié par le smartphone qui envoie une commande idoine à la carte. Dans ce processus initial, la communication en champ proche sert principalement à télé-alimenter en continu la carte sans contact. Ce processus initial vise à paramétrer le service de paiement sur la carte et notamment consiste à récupérer les empreintes du porteur et à les associer avec la carte comme données de référence auxquelles seront comparées par la suite des nouvelles données acquises par le capteur biométrique à des fins d'authentification.

Les empreintes peuvent également être acquises pour toute application dans le smartphone requérant l'authentification d'un utilisateur, par exemple pour des accès à des zones physiques sécurisées (bâtiments, etc.).

Dans un autre cas d'utilisation, les empreintes peuvent également servir à un contrôle d'accès à des données dans un smartphone.

Le smartphone sollicite (par commande) la carte sans contact pour l'acquisition d'empreintes, la comparaison avec les empreintes de référence et l'obtention d'une information d'authentification réussie ou non. A nouveau, dans ce processus d'authentification, la communication en champ proche sert principalement à télé-alimenter en continu la carte sans contact.

Ces diverses applications nécessitent donc que la communication en champ proche entre la carte sans contact et le dispositif mobile soit plus ou moins longue, en raison soit d'un volume de données à échanger soit d'une alimentation en continu de la carte. En effet, une interruption de la communication, et donc de l'alimentation, peut, par exemple pour des raisons sécuritaires, entraîner un blocage du programme utilisé sur le dispositif mobile ou nécessiter de recommencer l'ensemble de la phase opérationnelle (par exemple d'enrôlement).

Or aujourd'hui, les dispositifs mobiles tout au plus indiquent seulement à l'utilisateur qu'ils ont détecté la carte sans contact dans leur champ NFC, sans savoir si la carte est bien positionnée, c'est-à-dire de préférence dans le champ maximal de l'interface de communication sans contact (antenne) des dispositifs mobiles.

Il est donc facile pour l'utilisateur d'interrompre involontairement la communication et donc la télé-alimentation de la carte en tentant de maintenir celle-ci contre le smartphone. Il est notamment difficile pour l'utilisateur de connaître le positionnement idéal de la carte car celui-ci dépend de la position de l'antenne NFC dans la carte, de la position de l'antenne NFC dans le dispositif mobile ou encore de la sensibilité (ou puissance) du champ NFC utilisé.

Il existe donc un besoin d'améliorer cette situation afin de réduire les risques de perte préjudiciable de communication en champ proche.

On connaît par ailleurs les publications WO 2014/116235, US 2013/143604 et FR 3061333. WO 2014/116235 décrit un dispositif, et son procédé de fonctionnement, comprenant une antenne NFC et un écran, configuré pour indiquer la localisation de l'antenne NFC. US 2013/143604 décrit un dispositif de communication d'information permettant d'afficher un indicateur sur l'écran d'un dispositif, indiquant la localisation d'un capteur NFC. FR 3061333 décrit une carte mince intégrant un capteur d'empreinte digitale et un procédé de réalisation.

## Exposé de l'invention

Dans ce contexte, l'invention propose tout d'abord un procédé de communication en champ proche entre un dispositif mobile et une carte sans contact, comme défini par la revendication 1. Ce procédé comprend d'une part les étapes suivantes :

> afficher, sur un écran du dispositif mobile, un premier motif de positionnement, positionner la carte sans contact en une première position, à proximité du dispositif mobile, où un indicateur de carte prévu sur une face de la carte sans contact est aligné avec le premier motif de positionnement affiché, et
> établir une communication en champ proche entre le dispositif mobile et la carte sans contact dans la première position.

Corrélativement, l'invention concerne un dispositif mobile selon la revendication 14.

L'invention concerne également un système comportant un dispositif mobile tel que défini ci-dessus et la carte sans contact.

Grâce au motif affiché, l'utilisateur est aisément guidé pour réaliser un positionnement optimal de la carte sans contact avec une zone de communication en champ proche performante. L'emplacement d'affichage est en effet choisi préférentiellement pour maximiser le couplage électromagnétique entre la carte ainsi positionnée et le dispositif mobile.

La télé-alimentation de la carte sans contact est rendue plus efficace, réduisant les risques d'interruption de la communication en champ propre même lorsque l'utilisateur est amené à manipuler la carte. Il peut en effet, maintenir le positionnement optimal de la carte grâce à l'alignement de l'indicateur de carte avec le motif.

Selon l'invention toujours, le premier motif de positionnement est visuellement complémentaire de l'indicateur de carte (formant ainsi un motif prédéfini par exemple), et dans la première position l'indicateur de carte complémente visuellement le premier motif de positionnement. Cette disposition permet à l'utilisateur de bien positionner la carte (partiellement) sous ou sur le dispositif mobile tout en conservant l'usage entier de l'écran du dispositif.

Dans un mode de réalisation, dans la première position, la carte sans contact comporte une zone porteuse de l'indicateur de carte, qui s'étend au-delà d'un côté du dispositif mobile. Cette disposition facilite l'alignement alors que la carte peut être partiellement glissée sous ou sur le dispositif mobile.

Dans un mode de réalisation, le procédé comprend les étapes suivantes réalisées par le dispositif mobile :

obtenir une information représentative de la carte sans contact,
obtenir un emplacement d'affichage fonction de l'information obtenue, et
afficher le premier motif de positionnement sur l'écran à l'emplacement d'affichage obtenu.

Ainsi, l'amélioration de la communication en champ proche est rendue dynamique selon le type de carte utilisée.

Selon une caractéristique optionnelle, l'emplacement d'affichage est également fonction d'une information représentative du type du dispositif mobile.

Selon une autre caractéristique optionnelle, le premier motif de positionnement à afficher est également fonction de l'information obtenue. Cela permet d'adapter le visuel du motif (par exemple un logo) à celui de la carte.

Selon un mode de réalisation particulier, l'obtention de l'information représentative de la carte sans contact comprend l'utilisation d'un appareil photo embarqué du dispositif mobile pour acquérir une photo de la carte sans contact.

Selon un mode de réalisation particulier, l'obtention de l'information représentative de la carte sans contact comprend l'initialisation d'un canal de communication en champ proche entre le dispositif mobile et la carte sans contact au cours de laquelle la carte sans contact envoie un message d'initialisation comportant une indication représentative de la carte. Ainsi, l'utilisateur n'est pas sollicité.

Selon un mode de réalisation particulier, l'emplacement d'affichage est obtenu d'un équipement tiers distant du dispositif mobile, par exemple un serveur bancaire.

Dans un mode de réalisation, le premier motif de positionnement affiché comporte un premier indicateur pour le positionnement de la carte sans contact selon un premier axe. Cela permet de limiter le positionnement de la carte dans une zone préférentielle de communication avec champ optimum dans cette zone. Le télé-alimentation de la carte est efficace.

Selon une caractéristique particulière, le premier motif de positionnement affiché comporte un second indicateur pour le positionnement de la carte sans contact selon un second axe non parallèle au premier axe. Cette disposition permet de guider l'utilisateur vers un positionnement unique de la carte. Une communication sans contact optimale et une télé-alimentation efficace sont ainsi obtenues.

Dans un mode de réalisation, le premier motif de positionnement affiché comporte un motif non régulier (par exemple sans symétrie) complémentaire de l'indicateur de carte, de sorte à former un motif prédéfini. Cela permet de définir une unique position optimale de carte à l'aide d'un seul motif.

Dans un mode de réalisation, le premier motif de positionnement affiché comprend un motif prévu sur la carte en complément visuel de l'indicateur de carte.

Selon une caractéristique particulière, le premier motif de positionnement affiché comprend une représentation partielle d'un visuel de la carte sans contact.

Ces dispositions facilitent la compréhension par l'utilisateur de comment placer la carte par rapport au dispositif mobile.

L'indicateur de carte peut être prévu sur le recto ou le verso de la carte sans contact, selon que la carte doive être utilisée face principale (généralement celle avec la puce visible et avec le visuel explicite de l'opérateur) vers le haut ou vers le bas.

Selon l'invention toujours, la carte sans contact comporte un capteur biométrique dans une zone de carte qui s'étend au-delà d'un côté du dispositif mobile lorsque la carte sans contact est dans la première position. Cette disposition facilite l'usage du capteur biométrique de la carte dans une position où la communication en champ proche avec le dispositif mobile est efficace.

Cette zone portant le capteur biométrique peut être prévue sur le recto de la carte ou sur son verso, selon l'usage qui en est fait, la zone apparaissant face vers l'utilisateur afin de faciliter l'accès au capteur.

Selon l'invention toujours, le procédé comporte en outre les étapes suivantes :

> afficher, sur l'écran du dispositif mobile, un second motif de positionnement,
> positionner la carte sans contact en une seconde position, à proximité du dispositif mobile, où l'indicateur de carte est aligné avec le second motif de positionnement affiché, et
> établir une communication en champ proche entre le dispositif mobile et la carte sans contact dans la seconde première position.

Cette disposition s'applique particulièrement bien à l'utilisation de la carte biométrique sans contact des deux côtés du dispositif mobile, par exemple pour acquérir les empreintes digitales de la main droite et de la main gauche de l'utilisateur.

Par exemple, la zone de carte comportant le capteur biométrique s'étend au-delà de deux côtés opposés du dispositif mobile dans les première et seconde positions respectivement.

Elle s'applique également bien à l'utilisation de la carte biométrique sans contact pour l'acquisition des empreintes digitales du pouce et des autres doigts sans avoir à retourner le poignet de l'utilisateur.

Par exemple dans ce cas, la zone de carte comportant le capteur biométrique s'étend au-delà du même côté du dispositif mobile dans les première et seconde positions, la carte sans contact étant retournée (recto et verso) entre la première position (par exemple pour le pouce) et la deuxième position (par exemple pour les autres doigts).

Les première et deuxième positions peuvent être identiques (seule la carte étant retournée), auquel cas les deux motifs de positionnement sont identiques et affichés au même emplacement. Seule une instruction invitant l'utilisateur à retourner la carte sans contact peut être affichée comme guide.

Généralement, les première et deuxième positions sont distinctes compte tenu de la morphologie du pouce et des autres doigts. Dans ce cas, le même motif de positionnement peut être utilisé mais affiché différemment (autre position et/ou autre rotation). Bien entendu, des motifs différents peuvent toujours être utilisés, affichés à des positions différentes et/ou avec des rotations différentes.

Aussi, pour l'acquisition de tous les doigts des deux mains, l'utilisateur peut être amené à positionner les cartes sans contact dans quatre positions différentes.

Dans un mode de réalisation, le procédé comprend en outre les étapes suivantes :

> détecter un positionnement de la carte sans contact par rapport à la première position, et
> générer un signal de bon ou mauvais positionnement en fonction de la détection.

Bien entendu, cette approche peut être utilisée pour n'importe quel positionnement de carte envisagé, en particulier pour les diverses positions prévues pour l'acquisition de toutes les empreintes digitales des deux mains.

L'utilisateur est ainsi aidé dans son positionnement de la carte, notamment lorsque l'alignement du motif de positionnement avec l'indicateur de carte n'est pas aisé (par exemple lorsque le bord de l'écran est éloigné du bord du dispositif mobile) ou lorsque plusieurs motifs de positionnement sont affichés ensemble alors que l'un seulement doit être utilisé à un instant donné.

Selon un mode de réalisation particulier, la détection comprend la réception, par le dispositif mobile, d'un rapport émis par la carte sans contact représentatif d'une qualité de communication entre la carte sans contact et le dispositif mobile. Une variante à l'envoi du rapport peut consister pour la carte sans contact à piloter elle-même l'allumage d'une diode (LED) prévu sur la carte.

Selon un autre mode de réalisation particulier, la détection comprend la détection, par le dispositif mobile, d'un niveau de champ électromagnétique d'une communication entre la carte sans contact et le dispositif mobile.

## Brève description des dessins

D'autres particularités et avantages de l'invention apparaîtront encore dans la description ci-après, illustrée par les figures ci-jointes qui en illustrent des exemples de réalisation dépourvus de tout caractère limitatif.

[Fig. 1] La **Figure 1** illustre un exemple de carte sans contact prenant la forme d'une carte dual biométrique de paiement.

[Fig. 2] La **Figure 2** illustre un exemple de dispositif mobile prenant la forme d'un smartphone ou téléphone intelligent.

[Fig. 3] La **Figure 3** illustre un exemple de système pour une mise en oeuvre de l'invention.

[Fig. 4] La **Figure 4** illustre un premier exemple de motif de positionnement selon l'invention affiché sur l'écran d'un smartphone 50.

[Fig. 5] La **Figure 5** illustre un deuxième exemple de motif de positionnement selon l'invention affiché sur l'écran d'un smartphone 50.

[Fig. 6] La **Figure 6** illustre d'autres exemples de motif de positionnement selon l'invention affichés sur l'écran d'un smartphone 50.

[Fig. 7] La **Figure 7** illustre un quatrième exemple de motif de positionnement selon l'invention affiché sur l'écran d'un smartphone 50.

[Fig. 8] La **Figure 8** illustre des variantes de positionnement de motifs des **Figures 6** et 7 pour définir une position pivotée de la carte sans contact.

[Fig. 9] La **Figure 9** illustre, à l'aide d'un ordinogramme, des étapes générales d'un procédé selon l'invention.

[Fig. 10] La **Figure 10** illustre, à l'aide d'un ordinogramme, un autre mode de réalisation d'un procédé selon l'invention.

[Fig. 11] La **Figure 11** illustre un exemple d'enrôlement mettant en oeuvre deux positionnements différents de la même carte à l'aide du même motif de positionnement.

**Description détaillée**

La présente invention favorise le bon positionnement d'une carte sans contact à proximité d'un lecteur en champ proche, pour optimiser la communication en champ proche entre ces deux entités et la télé-alimentation de la carte.

Les exemples pris ci-dessous décrivent principalement le positionnement d'une carte dual biométrique lors d'un processus d'enrôlement à l'aide d'un téléphone intelligent (smartphone).

Généralement, le smartphone initie (par l'envoi d'une commande) le processus d'enrôlement au sein de la carte sans contact. L'acquisition des empreintes digitales est réalisée par la carte elle-même (via un capteur biométrique) qui les stocke en local (comme empreintes de référence).

Le champ proche est utilisé à titre principal pour télé-alimenter la carte sans contact pendant ce processus. En effet, soit la carte n'a pas de batterie interne, mais a besoin d'un maximum de puissance pour alimenter ses composants, soit elle dispose d'une batterie interne, mais il est souhaitable de ne pas la vider lors des opérations d'enrôlement couteuses en énergie.

Il est donc préférable d'avoir un positionnement optimal de la carte sans contact pour assurer une télé-alimentation efficace.

Dans des variantes, les empreintes digitales de l'utilisateur peuvent être acquises par le capteur biométrique et être transmises, par la communication en champ proche, à un programme d'enrôlement exécuté dans le smartphone.

Une carte dual dispose de deux interfaces de communication, l'une avec contact et l'autre sans contact type NFC ou ISO/IEC 14443. L'invention s'applique cependant à tout type de carte sans contact, qu'elle présente ou non également une interface par contact et/ou un capteur biométrique.

Le smartphone est un dispositif mobile apte à communiquer en champ proche avec une carte sans contact lorsque le smartphone est équipé d'une interface de communication NFC ou ISO/IEC 14443. L'invention s'applique cependant à tout type de dispositif mobile, incluant un téléphone mobile, une tablette tactile, un terminal de paiement sans contact, un ordinateur portable, un appareil photo, etc.

Le processus d'enrôlement n'est utilisé qu'à titre d'exemple d'une opération au cours de laquelle une communication en champ proche est mise en oeuvre entre le smartphone et la carte sans contact. L'invention s'applique cependant à tout type d'opération nécessitant une telle communication. Notamment, la carte sans contact peut être utilisée pour de nombreuses applications, par exemple des applications de paiement, de transport, de télécommunications, de santé, de stockage, etc.

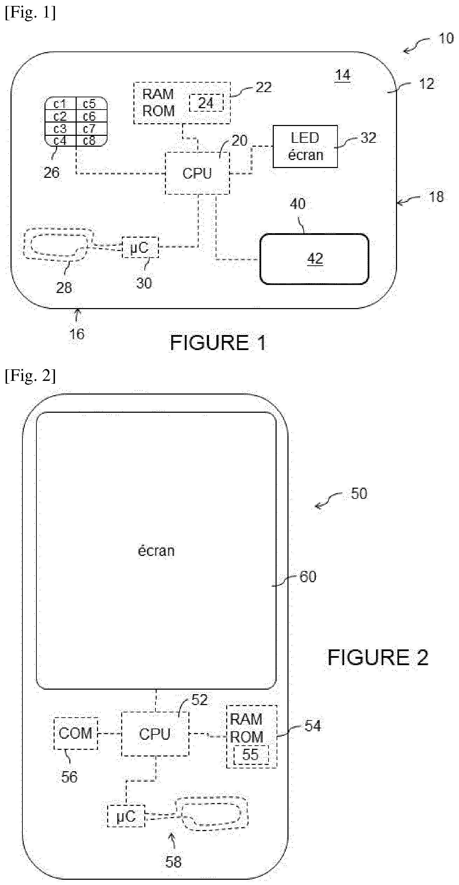

La **Figure 1** représente un exemple de carte dual biométrique 10 de paiement. Dans cette exemple, les composants représentés en pointillés sont généralement cachés dans le corps de carte 12 alors que les composants représentés en traits continus sont visibles.

La carte 10 comporte donc un corps de carte 12 en plastique dont une surface principale (ici face avant) 14 comporte généralement des inscriptions graphiques, typiquement le nom du porteur, un numéro de carte, un logo. Ces inscriptions peuvent avoir été réalisées par simple impression sur le support plastique 12, par dépôt d'éléments graphiques et/ou par embossage. Le visuel de la carte 10 constitue ainsi un motif visuel irrégulier.

Le verso de la carte peut également présenter un visuel spécifique.

La carte 10 peut être au format 1FF au sens de la norme ISO/IEC 7810: 2003, ID-1 et ainsi avoir une forme sensiblement rectangulaire. Ses bords longs sont référencés 16 et ses bords courts 18.

La carte 10 comporte un module électronique (CPU) 20 et des mémoires associées (RAM, ROM) 22 mémorisant des instructions de code 24 pour le fonctionnement de la carte, notamment un programme d'enrôlement. D'une façon générale, un programme de type différent de l'enrôlement peut être envisagé

Elle comporte également une ou plusieurs interfaces de communications avec l'extérieur, par exemple un ensemble de bornes ou plots de contacts 26 affleurant la surface supérieure 14 et une antenne 28 commandée par un microcontrôleur (μC) 30 de communication sans contact.

L'interface 26 est de préférence conforme à la norme ISO/IEC 7816 -2 : 2007. L'interface 26 est composée de huit contacts électriques répartis selon un motif matriciel de deux colonnes de quatre lignes. A chaque position matricielle correspond une position de contact électrique dénotée c1 à c8 selon la norme. Traditionnellement, les contacts c1 et c5 de la première ligne sont utilisés aux fins d'alimentation de la carte alors que les contacts c4 et c8 ne sont pas utilisés.

L'interface 28-30 est conforme à la norme NFC (pour « Near Field Communication » définie dans la norme ISO/IEC 18092 ou NFC IP-1) ou ISO/IEC 14443.

Lorsque la carte 10 est présentée à un lecteur (par contact ou sans contact), elle est alimentée par ce dernier via l'interface correspondante. On parle de télé-alimentation en cas d'alimentation par l'interface sans contact. Les instructions de code 24 peuvent alors être exécutées automatiquement ou sur commande.

La carte 10 comporte également un ou plusieurs capteurs biométriques 40 et optionnellement une ou des interfaces utilisateur 32, typiquement des LEDs et/ou un afficheur, pour renseigner l'utilisateur de différents états ou informations de la carte.

Les différents composants sont reliés entre eux par un ou des bus informatiques.

Le capteur biométrique 40 comporte une zone 42 d'acquisition, généralement affleurant la surface supérieure 14 de la carte 10. En variante, le capteur biométrique 40 peut être prévu sur la face opposée de la carte (face inférieure).

Dans l'exemple représenté, le capteur biométrique 40 est un capteur capacitif d'empreinte digital, par exemple fabriqué selon le procédé décrit dans la publication FR 3 061 333 A1.

D'autres capteurs biométriques peuvent être utilisés, par exemple de façon non exhaustive un capteur optique, un capteur à luminescence, un capteur à imagerie multispectrale ou un capteur thermique.

Traditionnellement, les paiements par carte sont sécurisés à l'aide d'un code personnel (PIN) que l'utilisateur doit saisir par exemple sur un terminal. Ce code saisi est alors comparé à un code PIN de référence stockée dans la carte, permettant en cas de comparaison positive d'authentifier le porteur.

La carte de paiement biométrique 10 permet de remplacer l'utilisation du code PIN par une authentification biométrique du porteur à l'aide du capteur biométrique 40.

Des données biométriques de référence de l'utilisateur doivent être acquises lors d'une configuration initiale pour être stockées dans la carte 10. Il s'agit de l'opération d'enrôlement au cours de laquelle l'utilisateur acquiert les empreintes digitales de tout ou partie de ses doigts. C'est en effet ces empreintes de référence qui seront utilisées comme données de référence auxquelles les seront comparées par la suite des nouvelles données acquises par le capteur biométrique 40 à des fins d'authentification, lors d'une transaction.

Les empreintes de référence sont généralement stockées dans la carte, et en variante dans le dispositif mobile utilisé ou dans un serveur distant.

Pour réaliser cette opération d'enrôlement, l'utilisateur peut approcher la carte 10 d'un terminal ou dispositif mobile 50 telle celui représenté, sous forme de smartphone, à la **Figure 2.**

De façon classique, le smartphone 50 comporte une unité de traitement CPU 52, des mémoires associées (RAM, ROM) 54, un module COM 56 de communication sur un réseau externe, une interface 58 de communication sans contact en champ proche, comportant une antenne commandée par un microcontrôleur (μC), et un écran 60. D'autres éléments classiques (par exemple batterie, clavier, carte SIM, etc.) ne sont pas représentés pour une meilleure lisibilité.

Les mémoires 54 mémorisent des instructions de code 55 pour le fonctionnement de la carte lorsqu'exécutées par le CPU 52, notamment un programme d'enrôlement complémentaire du programme 24 de la carte 10.

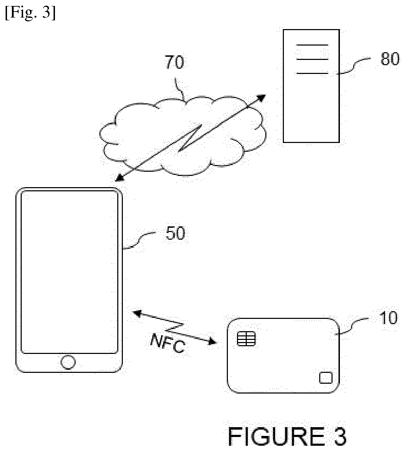

Le module COM 56 est un module de radiotéléphonie pour l'accès à un réseau de téléphonie mobile, un module de communication numérique pour l'accès à un réseau wifi ou un réseau filaire numérique, ou un module pour l'accès à tout autre réseau 70, sans fil ou non. Comme montré en **Figure 3,** le réseau 70 permet au smartphone 50 d'accéder à un ou plusieurs serveurs distants 80 pour des mises en oeuvre de l'invention.

L'interface sans contact ou NFC 58 du smartphone 50 est de même nature que l'interface sans contact 28/30 de la carte 10, permettant ainsi au smartphone et à la carte 10 d'établir des communications en champ proche.

L'emplacement de l'interface NFC 58 dans le smartphone varie selon les modèles de smartphones (de façon générale selon le type de dispositif mobile 50). Elle est généralement disposée dans la partie arrière du smartphone (la face opposée à celle de l'écran 60).

Lorsque la carte 10 entre dans le champ de l'interface NFC 58, la carte 10 se trouve être alimentée par induction électromagnétique (télé-alimentation), déclenchant une procédure d'initialisation d'une communication en champ proche. Le smartphone 50 détecte à cette occasion la présence de la carte 10.

En réponse, notamment à la première mise sous tension de la carte, le programme d'enrôlement 24 peut être exécutée.

L'utilisateur peut lancer manuellement l'exécution du programme d'enrôlement complémentaire 55, par exemple lorsqu'une indication de la détection de la carte 10 est affichée par le smartphone 50 sur l'écran 60.

En variante, le programme 55 peut se lancer automatiquement à la détection de la carte. De même, le lancement du programme 24 dans la carte peut être déclenché par une action volontaire de l'utilisateur dans le programme d'enrôlement 55.

Le programme d'enrôlement 55 guide l'utilisateur au fil des étapes d'enrôlement.

L'opération d'enrôlement est longue car elle nécessite de manipuler plusieurs fois la carte 10 pour apposer successivement les doigts de l'utilisateur, d'autant que pour obtenir des empreintes de référence précises, il peut être recommandé d'acquérir plusieurs fois les empreintes d'un même doigt.

Pendant cette opération, les composants (le capteur biométrique notamment) sont fortement sollicités. La carte sans contact est donc fortement consommatrice d'énergie électrique télé-fournie par le smartphone 50.

Si la carte 10 se retrouve être mal positionnée par rapport à l'interface NFC 58, la qualité de la télé-alimentation et la qualité de la communication en champ proche s'en trouvent réduites. Or la faible portée du NFC, de quelques centimètres, conduit assez facilement à une dégradation de la télé-alimentation insuffisante pour le bon fonctionnement des composants de la carte, voire à des coupures d'alimentation, ainsi qu'à un grand nombre d'erreurs involontaires de communication, en cas de mauvais positionnement. Ces dégradations et erreurs peuvent conduire à l'interruption ou au blocage de l'opération d'enrôlement.

La présente invention fournit une aide au bon positionnement de la carte 10 à proximité du smartphone 50, pour optimiser la communication en champ proche entre ces deux entités, et donc la télé-alimentation.

Selon l'invention, on affiche, sur l'écran 60 du smartphone, au moins un motif visuel (ou graphique) de positionnement. Grâce à ce marqueur visuel, l'utilisateur est guidé pour positionner la carte 10 vers une première position, à proximité du smartphone 50, permettant qu'une communication en champ proche de bonne qualité soit établie entre le dispositif mobile et la carte sans contact dans la première position. La carte est généralement maintenue dans un plan parallèle au plan principal du smartphone 50 (usuellement le plan formé de la surface de l'écran ou du boitier arrière). La carte peut être face supérieure 14 orientée vers l'utilisateur ou être retournée (face 14 cachée de l'utilisateur).

Pour atteindre cette première position, un indicateur de carte prévu sur la carte sans contact doit être aligné avec le motif de positionnement affiché. L'utilisateur est ainsi entièrement guidé. Ce positionnement précis est reproductible et peut être vérifié en continu alors que l'utilisateur manipule la carte 10 pour par exemple acquérir ses empreintes digitales.

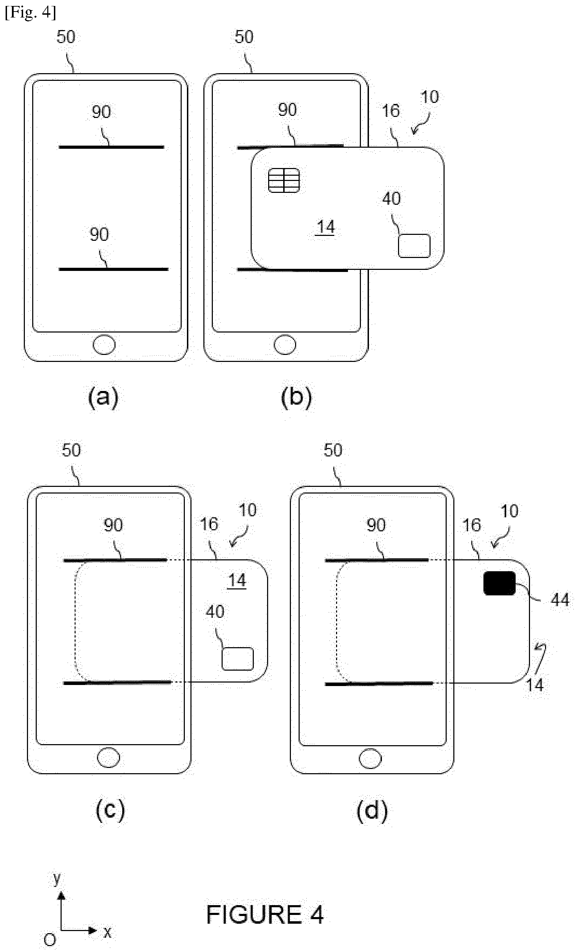

La **Figure 4** illustre un premier exemple de motif de positionnement 90 affiché sur l'écran du smartphone 50 dont le module NFC 58 est positionné sensiblement en son centre.

Dans cet exemple (Figure 4a), le motif de positionnement prend la forme de deux traits ou segments parallèles distants d'une largeur de carte. En variante, seul l'un des deux segments peut être affiché. Ces segments forment des indicateurs pour le positionnement de la carte sans contact 10 selon un premier axe (O,y) dans le plan de la carte.

Des motifs autres que des segments peuvent être utilisés, par exemple des points, des repères, des marques, des images, etc.

L'utilisateur peut alors apposer la carte 10 sur l'écran 60 de sorte à faire correspondre la morphologie de la carte avec le motif de positionnement 90, dans l'exemple en alignant les bords 16 avec les segments 90 (Figure 4b). Les bords 16 de la carte 10 servent ainsi d'indicateurs de carte pour le positionnement de celle-ci.

A noter que les extrémités des segments à gauche sur la figure forment un motif qui est visuellement complémentaire de l'indicateur de carte (les bords 16) et forment ensemble un motif prédéfini, ici une ligne continue.

En variante, l'utilisateur peut approcher la carte 10 sous le smartphone 50 et l'accoler contre le boitier inférieur de ce dernier. Là encore, l'utilisateur aligne visuellement les bords 16 avec les segments 90 (Figure 4c). Dans ce cas, le motif de positionnement (segments 90) est visuellement complémentaire de l'indicateur de carte (partie à droite des bords 16), et dans la première position telle qu'illustrée sur la Figure, l'indicateur de carte complémente visuellement le motif de positionnement. En effet, les segments 90 et bords 16 sont alignés.

Dans cette position, la carte 10 comporte une zone porteuse de l'indicateur (bords 16) de carte, qui s'étend sur un côté du smartphone 50. Dans cet exemple, cette partie porte en outre le capteur biométrique 40, permettant son utilisation dans cette position de communication en champ proche optimale.

Dans cet exemple, les segments 90 sont prévus de telle sorte que la carte 10 soit apposée perpendiculaire au smartphone 50 (leurs axes longitudinaux sont orthogonaux). D'autres positions peuvent être envisagées : axes longitudinaux parallèles ou pivotés d'un angle quelconque.

Egalement, bien que la carte 10 dans la position illustrée soit face supérieure 14 orientée vers l'utilisateur (vers le haut), il peut être envisagé que la carte 10 soit retournée, face 14 vers le bas. C'est ce qui est illustré en Figure 4d (applicable également au cas où la carte est positionnée sur le smartphone) où un marqueur visuel 44 (ici un rectangle noire - mais tout type de marqueur peut être envisagé) est prévu sur la face arrière de la carte de façon co-localisée au capteur biométrique 40. Cela aide l'utilisateur à bien positionner ses doigts sur le capteur 40 non visible.

D'ailleurs, ce retournement peut être réalisé lors du processus d'enrôlement pour faciliter l'acquisition des empreintes digitales du pouce (avec la face 14 vers le haut) et des autres doigts (avec la face 14 vers le bas) sans que l'utilisateur n'ait à tordre son poignet.

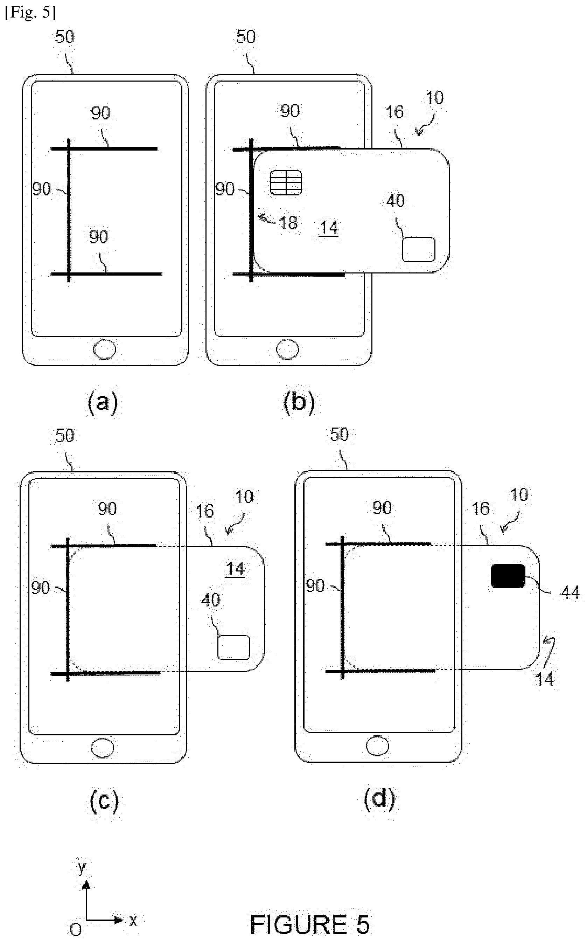

La **Figure 5** illustre un deuxième exemple de motif de positionnement 90 affiché sur l'écran 60 du smartphone 50 dont le module NFC 58 est positionné sensiblement en son centre. Le motif comprend les mêmes segments que ceux du premier exemple de motif de la **Figure 4** et comprend en outre un second motif, ici un segment vertical, pour le positionnement de la carte 10 selon un second axe (O,x) dans le plan de la carte et non parallèle au premier axe (O,y). Dans cet exemple (Figure 5a), les segments sont perpendiculaires et se coupent. En variante, les segments peuvent être plus courts et ne pas se couper.

L'utilisateur peut alors utiliser le bord 18 pour aligner la carte 10 avec le segment vertical 90 (Figure 5b). Les extrémités du segment vertical forment un motif qui est visuellement complémentaire du bord 18 de la carte et forment ensemble un motif prédéfini, ici une ligne continue.

Ce segment vertical 90 aide également l'utilisateur à évaluer la profondeur à laquelle enfoncer la carte 10 sous le smartphone 50 (Figure 5c).

A nouveau, d'autres positions peuvent être envisagées pour les segments 90 ainsi que le positionnement de la carte face supérieure 14 vers le haut (Figure 5c) ou vers le bas (Figure 5d), comme évoqué plus haut.

En variante aux segments 90, les contours d'une carte peuvent être affichés sur l'écran 60 en tant que motif de positionnement.

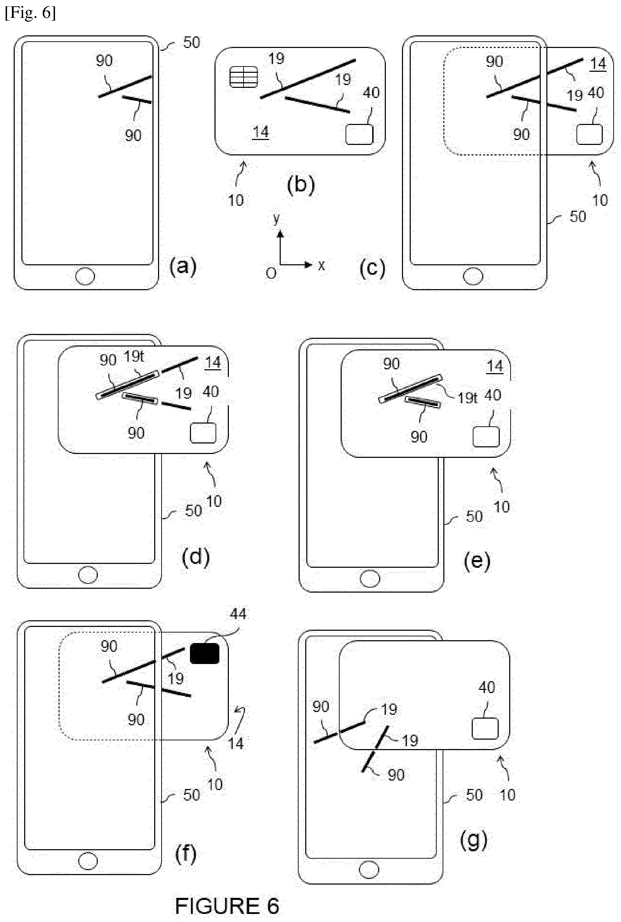

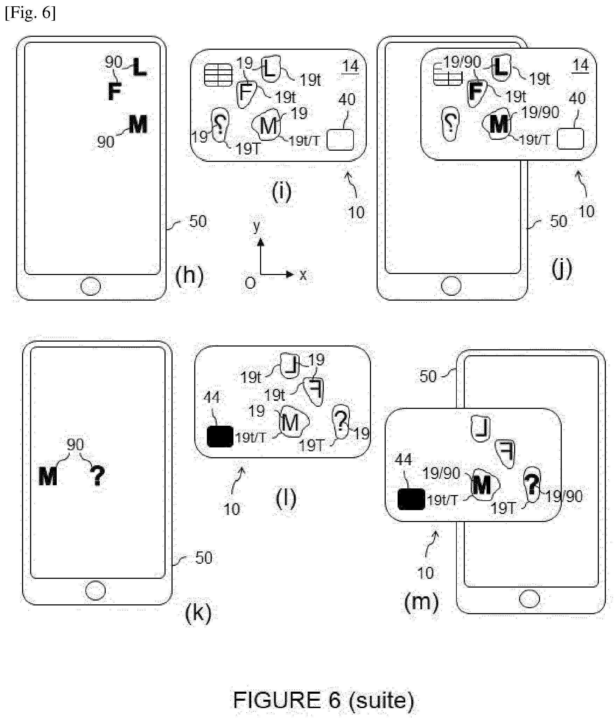

La **Figure 6** illustre un troisième exemple de motif de positionnement 90. Dans cet exemple le module NFC 58 est positionné vers le haut du smartphone 50. On voit ainsi que la position d'affichage du motif peut varier d'un smartphone à l'autre pour tenir compte de l'emplacement du module NFC.

Ce troisième exemple de motif de positionnement 90 comporte également deux indicateurs (des segments) affichés selon deux axes non parallèles, ici non perpendiculaires. Les deux segments affichés peuvent se croiser ou non.

Le motif de positionnement 90 peut être affiché jusqu'au bord de l'écran 60 du côté où doit être positionnée la carte 10 (Figure 6a). Cela permet de réaliser un meilleur positionnement lorsque la carte 10 est glissée sous le smartphone 50.

Dans cet exemple, le motif de positionnement 90 correspond à une sous-partie d'un indicateur (ici motif) de carte 19 prévu sur la carte 10 (Figure 6b). Ainsi, le motif 90 comprend un motif prévu sur la carte en complément visuel de l'indicateur de carte. En variante, seule la sous-partie complémentaire du motif de positionnement 90 peut être prévue sur la carte 10 (donc seule la partie visible sur la Figure 6c).

L'indicateur 19 de carte peut simplement être imprimé sur la face supérieure 14 de la carte, être un élément rapporté (couche collée, élément poinçonné, etc.) ou résulter d'un embossage de la carte 10.

Dans une variante, l'indicateur de carte peut comprendre une ou plusieurs portions transparentes 19t (ici deux rectangles) en plus de l'indicateur 19 décrit ci-dessus (Figure 6d) ou à la place de l'indicateur 19 (Figure 6e). L'utilisateur n'a plus qu'à aligner le motif 90 affiché avec les portions transparentes et/ou avec l'indicateur 19 si présent (carte sur le smartphone). Les portions transparentes peuvent être faites d'un matériau transparent dans la masse du corps de carte 12 ou être de simple ouvertures traversantes dans le corps de carte. Les portions 19t illustrées sont deux rectangles. D'autres formes peuvent être bien entendu utilisées (par exemple forme géométrique, dessin, image, logo, ...).

Dans une autre variante permettant le positionnement de la carte face supérieure 14 vers le bas, l'indicateur 19 est prévu sur la face arrière de la carte avec éventuellement le marqueur 44 (Figure 6f), comme évoqué plus haut. Dans cette variante, l'indicateur 19t peut être utilisé en combinaison ou non avec l'indicateur 19 suivant le positionnement de la carte respectivement, sur ou sous le smartphone 50.

Dans les divers cas, le motif de positionnement 90 est visuellement complémentaire d'un indicateur de carte (soit l'indicateur 19 entier soit la sous-partie complémentaire). Ainsi, dans la première position, l'indicateur de carte 19 complémente visuellement le motif de positionnement 90. En réalité, le motif de positionnement 90 comporte un motif non régulier complémentaire de l'indicateur 19 de carte, de sorte à former un motif prédéfini (celui illustré sur la Figure 6b). Un motif peut être considéré comme irrégulier s'il ne présente pas de symétrie apparente. Un tel motif permet de définir une unique position pour la carte 10.

La Figure 6g propose une variante où la carte 10 peut être apposée sur le smartphone 50 (et non glissée dessous). Les deux segments formant le motif de positionnement 90 sont visuellement complémentaires des indicateurs 19 prévus sur la carte.

A nouveau, un simple alignement des segments est recherché par l'utilisateur pour bien positionner la carte 10.

La Figure 6g s'applique également à un positionnement de la carte face supérieure 14 vers le bas, l'indicateur 19 et/ou l'indicateur 19t étant prévu sur la face arrière de la carte avec éventuellement le marqueur 44 (montré en Figure 6f).

Dans les positions montrées en Figures 6c, 6d, 6f, la carte 10 comporte également une zone porteuse de l'indicateur 19 de carte, qui s'étend au-delà d'un côté du smartphone 50. Dans cet exemple, cette zone porte en outre le capteur biométrique 40, permettant son utilisation dans cette position de communication en champ proche optimale. A nouveau, la carte 10 peut être face supérieure 14 tournée vers le bas de telle sorte que le capteur biométrique 40 n'est pas visible. La carte 10 peut alors comprendre sur sa face arrière (visible de l'utilisateur) le marqueur 44 en plus d'un indicateur de carte 19 permettant son positionnement par alignement avec le motif 90.

Un indicateur transparent 19t peut également être prévu.

Une variante de la Figure 6d est illustrée aux Figures 6h à 6m. Dans cette variante, l'indicateur 19 est prévu sur la zone transparente 19t (constituée d'un matériau transparent dans l'épaisseur de la carte 10).

La carte 10 présente au moins une portion transparente (19t -trois dans l'exemple illustré en Figure 6i) qui comporte un indicateur 19 tel que déjà évoqué (par exemple inscription, logo, image, forme, ...).

Dans cet exemple, le motif de positionnement 90 affiché correspond aux indicateurs 19 prévus sur la ou les portions transparentes 19t (Figure 6h). L'utilisateur vient apposer la carte 10 (face supérieure 14 vers le haut) sur le smartphone 50 en veillant à superposer ou chevaucher, c'est-à-dire aligner, l'indicateur 19 de la ou les portions 19t avec le motif 90, grâce à la transparence de la portion 19t (Figure 6j).

Dans l'exemple illustré, plusieurs (trois) portions transparentes 19t distinctes comportent des lettres (ici F, M, L - ce pourrait être d'autres motifs) à aligner sur les lettres correspondantes du motif 90 affiché. Pour faciliter l'alignement, les lettres du motif 90 sont affichées plus épaisses que celles des indicateurs 19.

L'indicateur 19 peut être simplement imprimé ou collé sur le matériau transparent de la portion 19t, soit sur la face supérieure 14 (pour une meilleure visibilité), soit en miroir sur la face inférieure de la carte (pour un positionnement plus précis sur le motif 90 comme décrit par la suite).

Dans une variante, l'indicateur 19 peut être incrusté, par poinçonnage, dans le matériau transparent de la portion 19t surtout ou partie de l'épaisseur de la carte, avec affleurement ou non à la surface de la carte, sur la face supérieure 14 et/ou sur la face inférieure de la carte.

La carte 10 comporte une ou plusieurs autres portions transparentes 19T destinées à être utilisées lorsque la carte est retournée (face supérieure 14 vers le bas). La portion 19T comporte également un indicateur 19 (inscription, logo, image, forme, ...) imprimé ou collé, soit sur la face inférieure (pour une meilleure visibilité), soit en miroir sur la face supérieure 14 de la carte (pour un positionnement plus précis sur le motif 90 comme décrit par la suite). La variante d'incrustation du motif 19 telle que présentée ci-dessus est aussi applicable pour les portions transparentes 19T.

L'utilisation d'indicateurs 19 orientés (typiquement des lettres ou chiffres ou sigles) permet à l'utilisateur de facilement identifier ceux à utiliser pour positionner la carte retournée ou non (Figures 6i et 6l).

Avantageusement, un indicateur 19 peut être symétrique (le « M » dans l'exemple) de telle sorte qu'il puisse être utilisé pour le positionnement de la carte retournée et non retournée. La portion transparente est référencée 19t/T. Dans un mode de réalisation simplifié, seule la portion transparente 19t/T correspondante peut être prévue sur la carte 10.

Dans l'exemple illustré, le motif de positionnement 90 affiché (Figure 6k) correspond aux indicateurs 19 prévus sur la ou les portions transparentes 19T. L'utilisateur vient apposer la carte 10 retournée sur le smartphone 50 en veillant à superposer ou chevaucher, c'est-à-dire aligner, les indicateurs 19 de la ou les portions 19T avec le motif 90, grâce à la transparence de ces portion 19T (Figure 6m).

Un marqueur 44 prévu sur le verso de la carte 10 permet à l'utilisateur de facilement positionner ses doigts pour une acquisition par le capteur biométrique 40 prévu sur l'autre face de la carte.

Dans ces exemples, la ou les portions transparentes 19t, 19T englobant le ou les indicateurs 19 facilitent le positionnement, par transparence, de ces indicateurs 19 sur le ou les motifs correspondant de positionnement 90.

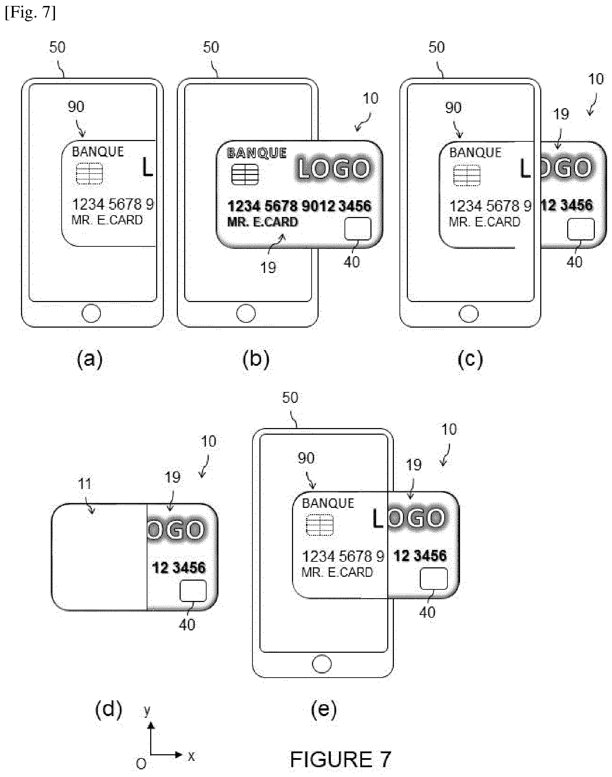

La **Figure 7** illustre un quatrième exemple de motif de positionnement 90 s'appuyant sur le visuel de la carte, c'est-à-dire l'illustration formée sur la surface supérieure 14 de la carte 10.

Le motif de positionnement 90 illustré sur la Figure est une représentation partielle du visuel 19 de la carte 10 (Figure 7b) affichée jusqu'au bord de l'écran 60 du côté où doit être positionnée la carte 10 (Figure 7a). Le visuel 19 est par exemple formé de la plage de contacts 26, du nom de la banque, d'un logo, d'un numéro de carte, d'un nom du porteur de carte. Bien entendu, d'autres informations peuvent être prévues. Egalement la couleur de la carte 10 peut faire partie du visuel 19.

L'indicateur de carte utilisé pour le positionnement correspond alors sensiblement au morceau manquant du visuel de la carte selon cette représentation partielle. Le motif de positionnement 90 est donc visuellement complémentaire de l'indicateur de carte (le morceau qui dépasse comme illustré sur la Figure 7c), de sorte à former un motif prédéfini, ici le visuel de la carte 10. Ainsi, dans la première position recherchée, l'indicateur de carte 19 complémente visuellement le motif de positionnement 90. En réalité, l'utilisateur n'a plus qu'à chercher à reconstituer le visuel de la carte 10 en positionnant celle-ci en complément visuel de la partie affichée par alignement de l'indicateur de carte 19 avec le motif 90.

Dans cet exemple de la Figure 7c, le morceau de la carte 10 porteur de l'indicateur 19 de carte est aussi porteur du capteur biométrique 40, et s'étend au-delà d'un côté du smartphone 50.

La représentation partielle du visuel 19 sur l'écran 60 pour former le motif de positionnement 90 peut être à l'identique du morceau de visuel correspondant (par exemple issue d'une photo de la carte).

Elle peut en variante être modifiée par rapport au morceau de visuel, notamment pour ne pas contenir des informations propres à la carte (nom du porteur, numéro de carte, voire nom et logo de la banque) pour le cas où le motif 90 soit applicable à un type générique de carte. Dans ce cas, ces informations propres peuvent être omises ou être visuellement remplacées par des informations par défaut.

Les modifications peuvent également comprendre des simplifications graphiques, par exemple suppression de couleurs, police simplifiée, logo schématique, etc.

La Figure 7d illustre une carte 10 (avec ou sans contacts 26) formée d'une portion transparente 11 et d'une portion officiant comme indicateur de carte 19.

La portion transparente 11 est la portion de carte destinée à chevaucher l'écran 60. Elle est formée d'un matériau transparent permettant de voir le motif de positionnement 90 par transparence (Figure 7e), et ainsi de positionner aisément la carte. Le matériau transparent n'interdit pas de voir certains composants électroniques (non illustrés) dans la portion transparente 11, typiquement des spires de l'antenne 28.

Ici aussi, l'indicateur de carte 19 complémente visuellement le motif de positionnement 90 (vu au travers de la portion transparente 11) pour former un motif prédéfini.

A nouveau, la carte 10 peut être face supérieure 14 tournée vers le bas de telle sorte que le capteur biométrique 40 n'est pas visible. La carte 10 peut alors comprendre sur sa face arrière (visible de l'utilisateur) le marqueur 44 en plus d'un indicateur de carte 19 permettant son positionnement par alignement avec le motif 90.

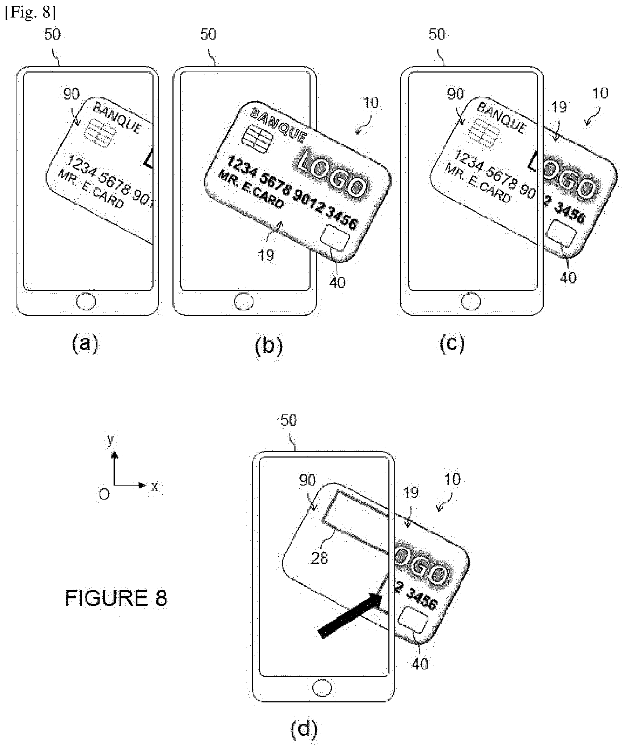

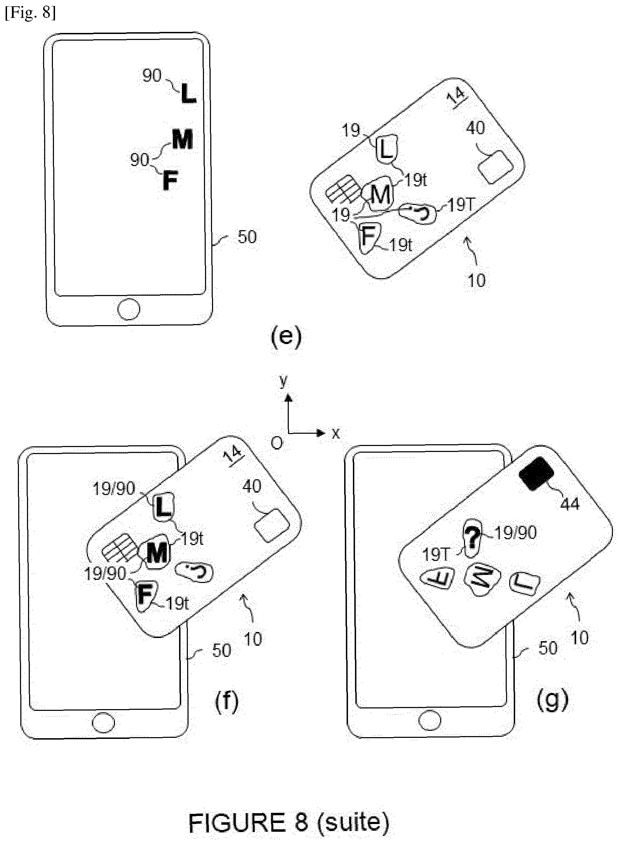

La **Figure 8** reprend le motif de positionnement 90 de la **Figure 7** lorsqu'il est utilisé pour définir une position pivotée (Figures 8a, 8b, 8c) de la carte 10 (les axes longitudinaux de la carte 10 et du smartphone 50 ne sont ni parallèles ni orthogonaux).

Selon la configuration d'antenne 28 de la carte 10 et d'antenne 58 du smartphone 50, le meilleur couplage électromagnétique peut en effet être obtenu par rotation de la carte 10. Dans l'exemple illustré (la Figure 8d montrant un exemple de configuration d'antenne 28 au niveau de la partie de carte placée sous le smartphone), cette rotation permet de réaliser un couplage avec la partie d'antenne 28 montrée par la flèche noire épaisse, ce qui n'est pas le cas dans la position de la Figure 7c.

A nouveau, la carte 10 peut être formée d'une portion transparente 11 et d'une portion officiant comme indicateur de carte 19.

Egalement, la carte 10 peut être face supérieure 14 tournée vers le bas de telle sorte que le capteur biométrique 40 n'est pas visible. La carte 10 peut alors comprendre sur sa face arrière (visible de l'utilisateur) le marqueur 44 en plus d'un indicateur de carte 19 permettant son positionnement par alignement avec le motif 90.

La variante des Figures 6h à 6m s'applique également bien à un positionnement pivoté de la carte comme illustré aux Figures 8e, 8f, 8g, avec sa face supérieure 14 pouvant être tournée vers le bas (Figure 8g) ou pas (Figure 8f). Le capteur biométrique 40 peut être visible ou non, et un marqueur 44 peut être prévu sur la face opposée au capteur, comme décrit précédemment.

La détermination de la position (incluant l'orientation) de carte 10 offrant le meilleur couplage avec un type de dispositif mobile 50 peut être réalisée de façon empirique et/ou systématique en testant un ensemble de cartes sans contact (par exemple plusieurs types connus) avec un ensemble de dispositifs mobiles (par exemple plusieurs types connus), dans une configuration avec face supérieure 14 tournée vers le haut ou tournée vers le bas.

Les informations de positionnement (incluant l'orientation) du motif de positionnement 90 à prévoir (complémentaire d'un indicateur de carte 19 choisi) sont ainsi déterminées et peuvent être stockées sous forme d'enregistrements dans le serveur 80 (en regroupant par exemple tous les positionnements des différents types de carte par type de dispositif mobile) ou directement dans le smartphone 50 (tous les positionnements des différents types de cartes pour ce smartphone uniquement).

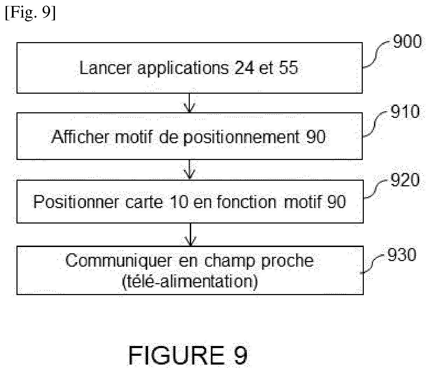

La **Figure 9** illustre, à l'aide d'un ordinogramme, des étapes générales d'un procédé selon l'invention. Elles permettent une communication sans contact en champ proche qui est efficace entre une carte sans contact 10 et un smartphone 50.

Ces étapes générales s'appliquent par exemple à un smartphone 50 préconfiguré pour une carte sans contact particulière 10. Cette préconfiguration prévoit que la position (incluant une éventuelle rotation) du motif de positionnement 90 et ce dernier sont prédéfinis dans le smartphone 50.

A l'étape 900, les applications 24 et 55 nécessitant une communication en champ proche sont lancées. Il peut s'agir d'une action volontaire de l'utilisateur sur le smartphone 50 ou d'une réponse à la détection de la carte 10 dans le champ NFC du smartphone ou à toute autre commande ou événement.

Ces applications sont par exemple des applications complémentaires d'enrôlement.

Dans un premier type de fonctionnement, l'application 55 pilote l'exécution de l'application 24 d'enrôlement en lui envoyant des commandes selon un séquencement d'étapes d'enrôlement, et en recevant des statuts en réponse.

Dans un deuxième type de fonctionnement, l'application 55 lit, dans la carte 10, une information représentative du séquencement des étapes d'enrôlement. En d'autres termes, la carte 10 peut mettre à jour cette information au fur et à mesure du passage d'une étape à l'autre pendant l'enrôlement, permettant à l'application 55 lisant cette information de connaître le déroulement de l'enrôlement pour par exemple afficher les instructions idoines à l'utilisateur.

A l'étape 910, un motif de positionnement 90 (par exemple l'un quelconque des **Figures 4** à **8**) est affiché sur l'écran 60 à l'emplacement prédéfini.

A l'étape 920, l'utilisateur approche la carte sans contact 10 à proximité du smartphone 50 en s'assurant que l'indicateur de carte 19 prévu sur celle-ci soit aligné avec le motif 90 affiché. Des exemples d'alignement, par superposition ou complémentation, sont décrits plus haut.

Dans la position d'alignement, la communication NFC entre la carte sans contact 10 et le smartphone 50 est maximale.

Aussi, à l'étape 930, la télé-alimentation de la carte 10 et des échanges NFC peuvent avoir lieu efficacement.

Dans le cas de l'enrôlement par exemple, l'application 55 commande l'acquisition par la carte 10 télé-alimentée des empreintes digitales de l'utilisateur à l'aide du capteur biométrique 40 dépassant latéralement du smartphone 50. Chaque acquisition réussi est indiquée par l'application 24 au travers d'un message de statut permettant à l'application 55 d'inviter l'utilisateur à acquérir à nouveau les empreintes digitales du doigt courant (chaque doigt étant par exemple acquis huit fois) ou à changer de doigt.

Dans la variante liée au deuxième type de fonctionnement, à chaque acquisition réussie la valeur d'une information représentative de l'étape est modifiée dans la carte 10 permettant à l'application 55 lisant cette valeur de basculer vers l'étape suivante d'enrôlement et d'inviter en conséquence l'utilisateur à acquérir à nouveau les empreintes digitales du doigt courant (chaque doigt étant par exemple acquis huit fois) ou à changer de doigt.

A tout moment, lorsqu'il manipule la carte 10 pour réaliser ces acquisitions, l'utilisateur peut réajuster le positionnement de la carte 10 à l'aide du motif de positionnement 90 qui reste affiché sur l'écran 60.

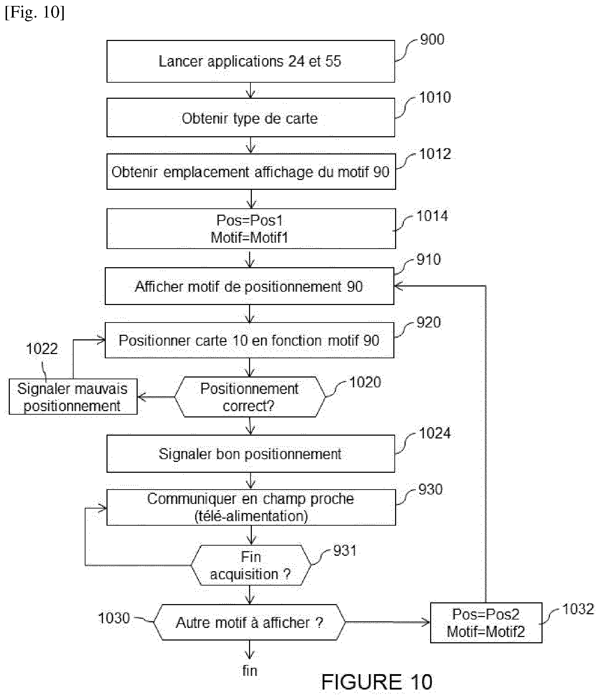

La **Figure 10** illustre, à l'aide d'un ordinogramme, un autre mode de réalisation d'un procédé selon l'invention.

Ce mode de réalisation met en oeuvre des phases qui sont optionnelles indépendamment les unes des autres.

Une première phase optionnelle (étapes 1010 à 1014 ci-dessous) permet d'ajuster dynamiquement le motif de positionnement 90 et/ou son emplacement (incluant l'angle de rotation) d'affichage sur l'écran 90. Cet ajustement est fonction du type de carte sans contact 10 et/ou du type de smartphone 50.

Lors de cette première phase optionnelle, une information représentative de la carte sans contact 10 est obtenue, par exemple un type de carte (correspondant à une configuration d'antenne 28), puis un emplacement d'affichage du motif 90 est obtenu en fonction de l'information obtenue, notamment parmi plusieurs emplacements associés à plusieurs (types de) cartes. L'emplacement tient compte aussi du type de smartphone 50 (correspondant à une configuration d'antenne 58). L'emplacement d'affichage peut être obtenu auprès du serveur 80 par voie aérienne OTA (pour *Over The Air* en anglais, en tenant compte du type de smartphone et/ou du type de carte) ou localement au smartphone 50 si celui-ci comporte l'ensemble des emplacements associés aux différents types de carte (pour son type de smartphone propre).

En variante, comme pour le procédé de la **Figure 9,** le motif 90 et son emplacement d'affichage sur l'écran 90 peuvent être prédéfinis.

Une deuxième phase optionnelle (étapes 1030 et 1032 ainsi que la boucle vers 910) peut s'appliquer à l'étape d'enrôlement sollicitant les deux mains de l'utilisateur. Pour faciliter l'acquisition des empreintes digitales des deux mains, il peut être opportun d'utiliser des positions différentes de la carte 10 pour les deux mains. Notamment, la position de carte pour la main droite peut permettre au capteur biométrique 40 d'être accessible sur le côté droit du smartphone 50, alors que la position de carte pour la main gauche devrait permettre au capteur biométrique 40 d'être accessible sur le côté gauche du smartphone 50.

Par conséquent, un deuxième motif de positionnement (éventuellement identique au premier) peut être affiché sur l'écran pour l'acquisition des empreintes de l'autre main. Le changement du premier motif (main droite) au deuxième motif de positionnement (main gauche) peut être automatique ou sur commande de l'utilisateur.

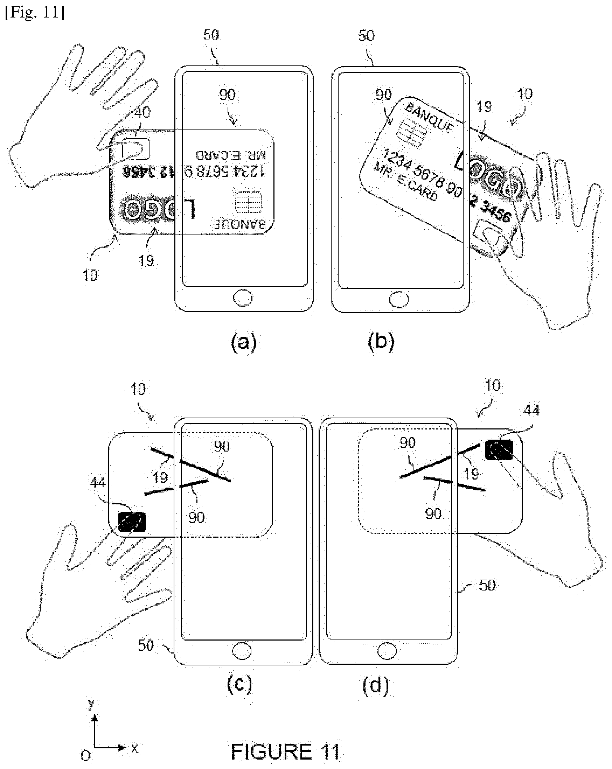

La **Figure 11** illustre un exemple d'enrôlement mettant en oeuvre deux positionnements différents de la même carte 10 à l'aide du même motif de positionnement 90 disposés à deux emplacements différents sur l'écran 60 (et orientés différemment).

La deuxième phase peut aussi s'appliquer lorsqu'il est préférable de retourner la carte 10 afin que le capteur biométrique soit dans une position opposée à l'utilisateur et faisant face directement aux doigts autres que le pouce, offrant une facilité de placement des doigts pour l'enrôlement d'empreintes, sans nécessité de rotation du poignet.

Dans ce cas, deux motifs de positionnement (l'un pour le pouce avec la carte face vers le haut - voir Figure 5c, et l'autre pour les autres doigts avec la carte retournée - voir Figure 5d) sont successivement affichés.

En tenant compte des deux mains, on peut ainsi avoir quatre motifs de positionnement à afficher pour l'acquisition des empreintes digitales de tous les doigts.

Une troisième phase optionnelle (étapes 1020 à 1024 ci-dessous) améliore l'aide au positionnement de la carte 10, en particulier lorsqu'elle est approchée sous le smartphone 50. Cette aide supplémentaire consiste à détecter un positionnement de la carte sans contact par rapport à la position souhaitée, puis à générer un signal de bon ou mauvais positionnement en fonction de la détection. L'utilisateur est ainsi averti d'un décalage de la carte 10 avec la position idéale.

Bien entendu il est possible de laisser l'utilisateur se fier uniquement au motif de positionnement 90 sans signal.

De retour à la **Figure 10,** A l'étape 900 déjà décrite, les applications 24 et 55, par exemple d'enrôlement, sont exécutées.

A l'étape 1010, une information représentative de la carte sans contact 10 ou du type de carte est obtenue.

Dans un mode de réalisation, l'information représentative de la carte sans contact 10 est obtenue en utilisant un appareil photo (non représenté) embarqué du smartphone 50 pour acquérir une photo de la carte sans contact. Il s'agit préférentiellement d'une action volontaire de l'utilisateur en réponse à une indication affichée sur l'écran 60 par l'application 55 exécutée. Cette photo du visuel de la carte 10 peut être traitée localement par le smartphone 50 pour en déduire un type de carte (par exemple grâce au numéro de carte).

Un type de carte définit une configuration d'antenne 28 propre.

Selon un autre mode de réalisation, par exemple lorsque l'application 55 est exécutée en réponse à la détection de la carte 10 dans le champ NFC du smartphone 50, un canal de communication en champ proche entre le dispositif mobile et la carte sans contact peut être initié. Au cours de l'initialisation de cette communication, la carte sans contact 10 peut envoyer un message d'initialisation comportant une indication représentative de la carte. Notamment, l'initialisation d'une communication NFC comporte l'envoi d'un message ATS (correspondant au message Answer-To-Reset pour le sanscontact). L'étape 1010 peut ainsi prévoir que la carte 10 ajoute, dans le message ATS, un identifiant de carte ou de type de carte.

Dans une variante liée au deuxième type de fonctionnement décrit plus haut, l'application 55 du smartphone, peut aller lire une information représentative du type de carte (par exemple, référence de la carte, type de l'antenne de la carte, emplacement de l'antenne, ...).

Selon encore un autre mode de réalisation, l'utilisateur peut être associé à une unique carte sans contact 10. Dans ce cas, un identifiant d'utilisateur ou de profil d'utilisateur (par exemple utilisé dans l'application 55) peut suffire à identifier le type de carte associée.

Une fois que l'application 55 a obtenue l'information représentative de la carte 10, elle obtient à l'étape 1012 l'emplacement d'affichage du motif 90 en fonction de cette information. Elle peut en outre obtenir une indication du type de motif de positionnement 90 à utiliser.

Dans un mode de réalisation, le smartphone 50 sollicite le serveur 80 via le réseau 70 (par voie OTA par exemple) pour l'obtention de l'emplacement (incluant une éventuelle rotation du motif de positionnement 90) et éventuellement la nature ou type du motif 90 à utiliser.

Pour ce faire, le smartphone 50 peut envoyer une requête au serveur 80 contenant l'information représentative de la carte (e.g. la photo ou l'identifiant de carte ou l'identifiant d'utilisateur ou profil) et un identifiant de type de smartphone.

Un prétraitement (par exemple analyse de la photo) de l'information représentative de la carte peut être nécessaire pour le serveur 80 afin d'obtenir un identifiant de type de carte tel qu'utilisé dans les enregistrements qu'il stocke.

Le serveur 80 retrouve parmi les enregistrements correspondants au type de smartphone indiqué, celui correspondant au type de carte en question, puis renvoie au smartphone l'emplacement d'affichage indiqué dans cet enregistrement ainsi que l'éventuel type de motif 90 à utiliser indiqué dans le même enregistrement.

L'enregistrement peut contenir plusieurs emplacements d'affichage pour un ou plusieurs motifs de positionnement. C'est le cas par exemple pour les deux ou quatre positions de carte nécessaires à l'enrôlement décrit plus haut (main droite/main gauche et pouce/autres doigts). Dans ce cas, le serveur 80 retourne les emplacements (par exemple Pos1 et Pos2) et les motifs (par exemple Motif1 et Motif2).

En variante, le smartphone 50 peut déterminer ce ou ces emplacements/motifs à l'aide d'enregistrements qu'il stocke localement.

A réception, le smartphone 50 sélectionne à l'étape 1014 le premier motif et le premier emplacement :

$$Pos=Pos1$$

$$Motif=Motif1$$

A l'étape 910 déjà décrite, le motif de positionnement Motif est affiché sur l'écran 90 à l'emplacement Pos.

A l'étape 920 déjà décrite, l'utilisateur positionne sa carte sans contact 10 en fonction du motif de positionnement affiché, par alignement de l'indicateur de carte 16, 18 ou 19 porté par la carte 10 avec ce dernier.

A l'étape 1020, le smartphone 50 détecte un positionnement de la carte sans contact par rapport à la position souhaitée. Une marge d'erreur dans le positionnement de la carte sans contact avec cette position, par exemple 1 cm, peut être autorisée. Dans ce cas il y a détection positive.

Un premier mode de réalisation de cette détection peut être basé sur une évaluation, par la carte, de la qualité de communication NFC entre la carte 10 et le smartphone 50. Notamment suite à l'affichage 910, l'application 55 peut envoyer des signaux de test à la carte. Cette dernière renvoie un message « status error » lorsqu'elle détecte trop d'erreurs dans les signaux reçus. La réception de ce message peut être un indicateur pour l'application 55 que la carte 10 n'est pas encore dans la position souhaitée. A l'inverse, la réception d'accusésréception et l'absence de tels messages en provenance de la carte 10 peut indiquer un bon positionnement de cette dernière.

Un deuxième mode de réalisation autonome au smartphone 50 est basé sur une mesure du champ électromagnétique (NFC) entre la carte 10 et le smartphone 50. Une telle mesure est classiquement utilisée pour ajuster l'horloge sur laquelle se base la communication en fonction de la qualité de la communication. L'application 55 peut comparer la mesure du champ NFC à un maximum indiqué dans les enregistrements évoqués plus haut (donc maximum fourni par le serveur 80 ou récupéré localement). Un écart trop important entre la mesure effectuée et le maximum indiqué signale un positionnement insatisfaisant.

Un signal de bon ou mauvais positionnement peut alors être généré à l'attention de l'utilisateur en fonction de la détection réalisée à l'étape 1020.

Si le positionnement de la carte 10 est insatisfaisant, un signal de mauvais positionnement est émis à l'étape 1022 notamment au travers de l'interface utilisateur 32. Il peut s'agir d'une indication visuelle ou lumineuse (affichage sur un écran, allumage d'une diode LED rouge) ou sonore ou un retour haptique.

Dans ce cas, l'application 55 reste en attente d'une correction de positionnement de la carte 10. L'application 55 peut re-tester (étape 1020) le positionnement de la carte de façon périodique, par exemple toutes les secondes ou demi-secondes. Cet état d'attente peut être limité dans le temps, afin de permettre de forcer le passage à l'étape 930 ci-dessous (par exemple un nombre limité de tests 1020 peut être défini).

Lorsque le positionnement de la carte 10 est satisfaisant, un signal de bon positionnement est émis à l'étape 1024 notamment au travers de l'interface utilisateur 32. Il peut s'agir d'un indication visuelle ou lumineuse (affichage sur un écran, allumage d'une diode LED verte) ou sonore ou un retour haptique.

Bien entendu, l'étape 1022 peut être omise : seul un bon positionnement est notifié à l'utilisateur ; ou en variante l'étape 1024 peut être omise : seul un mauvais positionnement est notifié à l'utilisateur.

Suite à l'étape 1024, la communication en champ proche entre le smartphone 50 et la carte sans contact 10 peut être utilisé (étape 930 décrite plus haut) car optimale.

Par exemple, l'utilisateur peut acquérir les empreintes digitales des doigts de sa main droite en étant guidé par l'application 55 qui l'informe de chaque étape d'enrôlement (éventuellement par lecture d'une information représentative du séquencement de l'enrôlement, inscrite dans la carte 10 selon le deuxième type de fonctionnement évoqué plus haut). Le test 931 permet de déterminer la fin de cette acquisition (fin automatique après 8 x 5 acquisitions par exemple ou fin manuelle par l'utilisateur ou lecture d'une information correspondante dans la carte).

A l'étape 1030, l'application 55 vérifie s'il existe un autre emplacement et un autre motif 90 à utiliser. C'est le cas par exemple s'il y a lieu d'acquérir les empreintes digitales des doigts de la main gauche ou d'acquérir les empreintes digitales du pouce après avoir acquis celles des autres doigts de la même main. La valeur représentative du séquencement de l'enrôlement lue dans la carte peut renseigner cette information.

Dans la négative, le procédé se termine.

Dans l'affirmative, le smartphone 50 sélectionne à l'étape 1032 les motif et emplacement suivants :

Pos=Pos2

Motif=Motif2

Puis le procédé retourne à l'étape 910 pour afficher le nouveau motif au nouvel emplacement, typiquement pour l'acquisition des empreintes digitales de la main gauche ou la prise d'empreintes avec la carte retournée en position verso. Cet affichage vient remplacer le précédent.

Dans l'exemple de la **Figure 11,** le même motif de positionnement 90 est affiché pour le pouce de la main gauche (Figure 11a) et le pouce de la main droite (Figure 11b) si ce n'est qu'il est affiché à des positions différentes avec des rotations différentes. Le capteur biométrique 40 se retrouve avantageusement dans la zone de carte qui s'étend au-delà de deux côtés latéraux opposés du smartphone 50 dans les deux positions d'utilisation respectivement. Sur la figure de gauche, le capteur biométrique 40 est facilement accessible sur la gauche du smartphone pour le pouce gauche, alors que sur la figure de droite, il est facilement accessible sur la droite du smartphone pour le pouce droit. Bien entendu le cas d'utilisation du pouce est donné à titre d'exemple non limitatif. L'ensemble des doigts de la main gauche ou droite peuvent être enrôlés pour la position de la carte considérée dans la description ci-dessus.

Un motif de positionnement 90 correspondant à un indicateur 19 pourvu sur la face arrière de la carte 10 est affiché pour retourner la carte 10 et la positionner de sorte à permettre l'acquisition des autres doigts de la main gauche (Figure 11c) et de la main droite (Figure 11d). Grâce au marqueur 44, l'utilisateur peut facilement disposer son doigt (en pointillés) sous la carte 10 au regard du capteur biométrique 40.

Les position et orientation du ou des motifs 90 peuvent différer pour l'acquisition des empreintes des doigts d'une même main et/ou des empreintes des doigts de l'autre main.

La boucle vers l'étape 910 assure que le second motif de positionnement 90 (et d'autres motifs ultérieurement) est affiché sur l'écran 60 du smartphone (étape 910), que l'utilisateur positionne la carte sans contact 10 dans la seconde position où l'indicateur de carte (16, 18, 19, 19t) est aligné avec le second motif de positionnement affiché, et qu'une communication en champ proche soit ainsi établie et utilisée entre le smartphone 50 et la carte 10 dans la seconde première position.

Le second motif de positionnement 90 peut présenter les mêmes propriétés que le motif de positionnement évoqué plus haut (notamment sa complémentarité avec l'indicateur de carte, mais également les configurations des **Figures 4** à **8**).

Un plus grand nombre de positionnements d'un ou plusieurs motifs de positionnement 90 peut être envisagé lors de la même exécution du procédé.

Les exemples qui précèdent ne sont que des modes de réalisation de l'invention qui ne s'y limite pas.

Par exemple, des exemples ci-dessus prévoient de déterminer à l'étape 1012 l'emplacement d'affichage du motif de positionnement 90 en fonction du type de carte détectée 10 et du type de smartphone 50. Cette approche nécessite parfois des échanges avec le serveur 80. Pour s'affranchir de cette contrainte, des variantes peuvent envisager de prévoir un unique emplacement d'affichage du motif de positionnement 90 sur l'écran 60 du dispositif mobile 50 et de prévoir de placer l'indicateur de carte 19 aux endroits idoines des différentes cartes 10 envisagées de telles sortes qu'elles soient positionnées dans leurs positions respectives optimisant la communication en champ proche. Par conséquent, l'indicateur de carte 19 est imprimé à des endroits différents pour deux cartes présentant des configurations d'antenne 28 différentes.

**Revendications**

1. Procédé de communication en champ proche entre un dispositif mobile (50) et une carte sans contact (10) comportant un capteur biométrique (40), comprenant les étapes suivantes :

   a) afficher (910), sur un écran (60) du dispositif mobile, un premier motif de positionnement (90),

   positionner (920) la carte sans contact en une première position, à proximité du dispositif mobile, où un indicateur de carte (18, 19) prévu sur une face de la carte sans contact est aligné avec le premier motif de positionnement affiché, , et
   établir (930) une communication en champ proche entre le dispositif mobile et la carte sans contact dans la première position, et

   b) afficher, sur l'écran du dispositif mobile, un second motif de positionnement,

   positionner la carte sans contact en une seconde position, à proximité du dispositif mobile, où l'indicateur de carte est aligné avec le second motif de positionnement affiché, et
   établir une communication en champ proche entre le dispositif mobile et la carte sans contact dans la seconde position procédé dans lequel le premier et le second motifs de positionnement (90) sont visuellement complémentaires de l'indicateur de carte (18, 19), et dans la première et la seconde positions, l'indicateur de carte complémente visuellement le premier et le deuxième motif de positionnement respectivement, de sorte à former un motif prédéfini et le capteur biométrique (40) est dans une zone de carte qui s'étend au-delà du dispositif mobile dans les première et seconde positions respectivement.

2. Procédé selon la revendication 1, dans lequel, dans la première position, la carte sans contact (10) comporte une zone porteuse de l'indicateur de carte (19), qui s'étend au-delà d'un côté du dispositif mobile (50).

3. Procédé selon la revendication 1 ou 2, dans lequel le premier motif de positionnement affiché (90) comporte un premier indicateur pour le positionnement de la carte sans contact selon un premier axe.

4. Procédé selon la revendication 3, dans lequel le premier motif de positionnement affiché (90) comporte un second indicateur pour le positionnement de la carte sans contact selon un second axe non parallèle au premier axe.

5. Procédé selon l'une des revendications 1 à 4, dans lequel le premier motif de positionnement affiché (90) comporte un motif non régulier complémentaire de l'indicateur de carte (18, 19).

6. Procédé selon l'une des revendications 1 à 5, dans lequel le premier motif de positionnement affiché (90) comprend un motif prévu sur la carte en complément visuel de l'indicateur de carte (19).

7. Procédé selon la revendication 6, dans lequel le premier motif de positionnement affiché (90) comprend une représentation partielle d'un visuel (19) de la carte sans contact (10).

8. Procédé selon l'une des revendications 1 à 5, comprenant les étapes suivantes réalisées par le dispositif mobile (50) :

   obtenir (1010) une information représentative de la carte sans contact,
   obtenir (1012) un emplacement d'affichage fonction de l'information obtenue, et
   afficher (910) le premier motif de positionnement (90) sur l'écran (60) à l'emplacement d'affichage obtenu.

9. Procédé selon la revendication 8, dans lequel l'emplacement d'affichage est également fonction d'une information représentative du type du dispositif mobile (50).

10. Procédé selon la revendication 8 ou 9, dans lequel le premier motif de positionnement (90) à afficher est également fonction de l'information obtenue.

11. Procédé selon l'une des revendications 1 à 10, dans lequel la zone de carte comportant le capteur biométrique s'étend au-delà de deux côtés opposés du dispositif mobile dans les première et seconde positions respectivement.

12. Procédé selon la revendication 11, dans lequel la zone de carte comportant le capteur biométrique s'étend au-delà du même côté du dispositif mobile dans les premières et seconde positions, la carte sans contact étant retournée entre la première position et la deuxième position.

13. Procédé selon l'une des revendications 1 à 12, comprenant en outre les étapes suivantes :

détecter (1020) un positionnement de la carte sans contact par rapport à la première position, et

générer (1022, 1024) un signal de bon ou mauvais positionnement en fonction de la détection.

14. Dispositif mobile (50) comportant une interface de communication en champ proche (58), un écran (60) et un processeur (52) configuré pour :

a) afficher, sur l'écran, un premier motif de positionnement (90), le premier motif de positionnement étant affiché à un emplacement de l'écran de telle sorte qu'une communication en champ proche est établie entre le dispositif mobile et une carte sans contact (10) comportant un capteur biométrique (40) lorsque la carte sans contact est positionnée en une première position, à proximité du dispositif mobile, où un indicateur de carte (18, 19) prévu sur une face de la carte sans contact est aligné avec le premier motif de positionnement affiché, et

b) afficher, sur l'écran, un second motif de positionnement, le second motif de positionnement étant affiché à un emplacement de l'écran de telle sorte qu'une communication en champ proche est établie entre le dispositif mobile et la carte sans contact (10) lorsque la carte sans contact est positionnée en une seconde position, à proximité du dispositif mobile, où l'indicateur de carte est aligné avec le second motif de positionnement affiché,

dispositif dans lequel le premier et le second motifs de positionnement (90) sont visuellement complémentaires de l'indicateur de carte (18, 19), et dans la première et la seconde positions l'indicateur de carte complémente visuellement le motif de positionnement, de sorte à former un motif prédéfini, et le capteur biométrique (40) est dans une zone de carte qui s'étend au-delà du dispositif mobile dans les première et seconde positions respectivement.

**Patentansprüche**

1. Verfahren zur Nahfeldkommunikation zwischen einer mobilen Vorrichtung (50) und einer kontaktlosen Karte (10), die einen biometrischen Sensor (40) aufweist, umfassend die folgenden Schritte:

a) Anzeigen (910), auf einem Bildschirm (60) der mobilen Vorrichtung, eines ersten Positionierungsmusters (90),

Positionieren (920) der kontaktlosen Karte an einer ersten Position, in der Nähe der mobilen Vorrichtung, in der ein auf einer Seite der kontaktlosen Karte vorgesehenes Kartenkennzeichen (18, 19) an dem angezeigten ersten Positionierungsmuster ausgerichtet ist, und
Aufbauen (930) einer Nahfeldkommunikation zwischen der mobilen Vorrichtung und der kontaktlosen Karte in der ersten Position, und

b) Anzeigen, auf dem Bildschirm der mobilen Vorrichtung, eines zweiten Positionierungsmusters,

Positionieren der kontaktlosen Karte an einer zweiten Position, in der Nähe der mobilen Vorrichtung, in der das Kartenkennzeichen an dem angezeigten zweiten Positionierungsmuster ausgerichtet ist, und
Aufbauen einer Nahfeldkommunikation zwischen der mobilen Vorrichtung und der kontaktlosen Karte in der zweiten Position, Verfahren, bei dem das erste und das zweite Positionierungsmuster (90) visuell komplementär zu dem Kartenkennzeichen (18, 19) sind und in der ersten und der zweiten Position das Kartenkennzeichen das erste beziehungsweise das zweite Positionierungsmuster visuell ergänzt, so dass ein vorgegebenes Muster gebildet wird, und der biometrische Sensor (40) in einem Kartenbereich ist, der sich in den ersten beziehungsweise zweiten Positionen jenseits der mobilen Vorrichtung erstreckt.

2. Verfahren nach Anspruch 1, wobei die kontaktlose Karte (10) in der ersten Position einen das Kartenkennzeichen (19) tragenden Bereich aufweist, der sich jenseits einer Längsseite der mobilen Vorrichtung (50) erstreckt.

3. Verfahren nach Anspruch 1 oder 2, wobei das angezeigte erste Positionierungsmuster (90) ein erstes Kennzeichen zur Positionierung der kontaktlosen Karte entlang einer ersten Achse aufweist.

**4.** Verfahren nach Anspruch 3, wobei das angezeigte erste Positionierungsmuster (90) ein zweites Kennzeichen zur Positionierung der kontaktlosen Karte entlang einer zweiten Achse, die nicht parallel zu der ersten Achse ist, aufweist.

**5.** Verfahren nach einem der Ansprüche 1 bis 4, wobei das angezeigte erste Positionierungsmuster (90) ein nicht regelmäßiges Muster aufweist, das komplementär zu dem Kartenkennzeichen (18, 19) ist.

**6.** Verfahren nach einem der Ansprüche 1 bis 5, wobei das angezeigte erste Positionierungsmuster (90) ein auf der Karte vorgesehenes Muster zur visuellen Ergänzung des Kartenkennzeichens (19) umfasst.

**7.** Verfahren nach Anspruch 6, wobei das angezeigte erste Positionierungsmuster (90) eine partielle Darstellung eines Bildes (19) der kontaktlosen Karte (10) umfasst.

**8.** Verfahren nach einem der Ansprüche 1 bis 5, umfassend die folgenden von der mobilen Vorrichtung (50) ausgeführten Schritte:

Erhalten (1010) einer für die kontaktlose Karte repräsentativen Information,
Erhalten (1012) eines Anzeigeorts, der von der erhaltenen Information abhängig ist, und
Anzeigen (910) des ersten Positionierungsmusters (90) auf dem Bildschirm (60) an dem erhaltenen Anzeigeort.

**9.** Verfahren nach Anspruch 8, wobei der Anzeigeort auch von einer für den Typ der mobilen Vorrichtung (50) repräsentativen Information abhängig ist.

**10.** Verfahren nach Anspruch 8 oder 9, wobei das anzuzeigende erste Positionierungsmuster (90) auch von der erhaltenen Information abhängig ist.

**11.** Verfahren nach einem der Ansprüche 1 bis 10, wobei sich der den biometrischen Sensor aufweisende Kartenbereich in den ersten beziehungsweise zweiten Positionen jenseits von zwei entgegengesetzten Längsseiten der mobilen Vorrichtung erstreckt.

**12.** Verfahren nach Anspruch 11, wobei sich der den biometrischen Sensor aufweisende Kartenbereich in den ersten beziehungsweise zweiten Positionen jenseits derselben Längsseite der mobilen Vorrichtung erstreckt, wobei die kontaktlose Karte zwischen der ersten Position und der zweiten Position gewendet wird.

**13.** Verfahren nach einem der Ansprüche 1 bis 12, umfassend ferner die folgenden Schritte:

Erkennen (1020) einer Positionierung der kontaktlosen Karte in Bezug auf die erste Position, und
Erzeugen (1022, 1024) eines Richtig- oder Falsch-Signals Positionieren in Abhängigkeit von der Erkennung.

**14.** Mobile Vorrichtung (50), aufweisend eine Nahfeldkommunikationsschnittstelle (58), einen Bildschirm (60) und einen Prozessor (52), der dazu ausgestaltet ist:

a) auf dem Bildschirm ein erstes Positionierungsmuster (90) anzuzeigen, wobei das erste Positionierungsmuster an einem Ort des Bildschirms angezeigt wird, so dass eine Nahfeldkommunikation zwischen der mobilen Vorrichtung und einer kontaktlosen Karte (10), die einen biometrischen Sensor (40) aufweist, aufgebaut wird, wenn die kontaktlose Karte an einer ersten Position, in der Nähe der mobilen Vorrichtung, positioniert wird, in der ein auf einer Seite der kontaktlosen Karte vorgesehenes Kartenkennzeichen (18, 19) an dem angezeigten ersten Positionierungsmuster ausgerichtet ist, und
b) auf dem Bildschirm ein zweites Positionierungsmuster anzuzeigen, wobei das zweite Positionierungsmuster an einem Ort des Bildschirms angezeigt wird, so dass eine Nahfeldkommunikation zwischen der mobilen Vorrichtung und der kontaktlosen Karte (10) aufgebaut wird, wenn die kontaktlosen Karte an einer zweiten Position, in der Nähe der mobilen Vorrichtung, positioniert wird, in der das Kartenkennzeichen an dem angezeigten zweiten Positionierungsmuster ausgerichtet ist,

Vorrichtung, bei der das erste und das zweite Positionierungsmuster (90) visuell komplementär zu dem Kartenkennzeichen (18, 19) sind und das Kartenkennzeichen das Positionierungsmuster in der ersten und der zweiten Position visuell ergänzt, so dass ein vorgegebenes Muster gebildet wird, und der biometrische Sensor (40) in einem Kartenbereich ist, der sich in den ersten beziehungsweise zweiten Positionen jenseits der mobilen Vorrichtung erstreckt.

**Claims**

**1.** Method for near-field communication between a mobile device (50) and a contactless card (10) comprising a biometric sensor (40), comprising the following steps:

a) displaying (910), on a screen (60) of the mobile device, a first positioning pattern (90),

positioning (920) the contactless card in a first position, close to the mobile device, where a card indicator (18, 19) provided on one side of the contactless card is aligned with the displayed first positioning pattern, and

establishing (930) near-field communication between the mobile device and the contactless card in the first position, and

b) displaying, on the screen of the mobile device, a second positioning pattern,

positioning the contactless card in a second position, close to the mobile device, where the card indicator is aligned with the displayed second positioning pattern, and establishing near-field communication between the mobile device and the contactless card in the second position, in which method the first positioning pattern (90) and the second positioning pattern (90) are visually complementary to the card indicator (18, 19) and, in the first position and the second position, the card indicator visually complements the first positioning pattern and the second positioning pattern, respectively, so as to form a predefined pattern and the biometric sensor (40) is in a card area which extends beyond the mobile device in the first position and second position, respectively.

2. Method according to Claim 1, wherein, in the first position, the contactless card (10) comprises an area which bears the card indicator (19), which extends beyond one side of the mobile device (50).

3. Method according to Claim 1 or 2, wherein the displayed first positioning pattern (90) comprises a first indicator for the positioning of the contactless card on a first axis.

4. Method according to Claim 3, wherein the displayed first positioning pattern (90) comprises a second indicator for the positioning of the contactless card on a second axis which is not parallel to the first axis.

5. Method according to one of Claims 1 to 4, wherein the displayed first positioning pattern (90) comprises an irregular pattern which is complementary to the card indicator (18, 19).

6. Method according to one of Claims 1 to 5, wherein the displayed first positioning pattern (90) comprises a pattern provided on the card as a visual complement to the card indicator (19).

7. Method according to Claim 6, wherein the displayed first positioning pattern (90) comprises a partial representation of a visual (19) of the contactless card (10).

8. Method according to one of Claims 1 to 5, comprising the following steps carried out by the mobile device (50):

obtaining (1010) information which is representative of the contactless card, obtaining (1012) a display location which is dependent on the obtained information, and displaying (910) the first positioning pattern (90) on the screen (60) in the obtained display location.

9. Method according to Claim 8, wherein the display location is also dependent on information which is representative of the type of the mobile device (50).

10. Method according to Claim 8 or 9, wherein the first positioning pattern (90) to be displayed is also dependent on the obtained information.

11. Method according to one of Claims 1 to 10, wherein the card area comprising the biometric sensor extends beyond two opposite sides of the mobile device in the first position and second position, respectively.

12. Method according to Claim 11, wherein the card area comprising the biometric sensor extends beyond the same side of the mobile device in the first position and second position, the contactless card being turned over between the first position and the second position.

13. Method according to one of Claims 1 to 12, further comprising the following steps:

detecting (1020) a positioning of the contactless card with respect to the first position, and generating (1022, 1024) a good or bad positioning signal depending on the detection.

14. Mobile device (50) comprising a near-field communication interface (58), a screen (60) and a processor (52) which is configured to:

a) display, on the screen, a first positioning pattern (90), the first positioning pattern being displayed in a location on the screen so that near-field communication is established between the mobile device and a contactless card (10) comprising a biometric sensor (40) when the contactless card is positioned in a first position, close to the mobile device, where a card indicator (18, 19) provided on one side of the contactless card is aligned with the displayed first positioning pattern, and

b) display, on the screen, a second positioning pattern, the second positioning pattern being displayed in a location on the screen so that near-field communication is established between the mobile device and the contactless card (10) when the contactless card is positioned in a second position, close to the mobile device, where the card indicator is aligned with the displayed second positioning pattern,

in which device the first positioning pattern (90) and the second positioning pattern (90) are visually complementary to the card indicator (18, 19) and, in the first position and the second position, the card indicator visually complements the positioning pattern, so as to form a predefined pattern, and the biometric sensor (40) is in a card area which extends beyond the mobile device in the first position and second position, respectively.

[Fig. 1]

FIGURE 1

[Fig. 2]

FIGURE 2

[Fig. 3]

FIGURE 3

[Fig. 4]

FIGURE 4

[Fig. 5]

FIGURE 5

[Fig. 6]

FIGURE 6

[Fig. 6]

FIGURE 6 (suite)

[Fig. 7]

(a)  (b)  (c)

(d)  (e)

FIGURE 7

[Fig. 8]

(a)  (b)  (c)

FIGURE 8

(d)

[Fig. 8]

(e)

(f)

(g)

FIGURE 8 (suite)

[Fig. 9]

| Lancer applications 24 et 55 | 900 |
| Afficher motif de positionnement 90 | 910 |
| Positionner carte 10 en fonction motif 90 | 920 |
| Communiquer en champ proche (télé-alimentation) | 930 |

FIGURE 9

[Fig. 10]

Lancer applications 24 et 55 — 900

Obtenir type de carte — 1010

Obtenir emplacement affichage du motif 90 — 1012

Pos=Pos1
Motif=Motif1 — 1014

Afficher motif de positionnement 90 — 910

Positionner carte 10 en fonction motif 90 — 920

1022

Signaler mauvais
positionnement

Positionnement
correct? — 1020

Signaler bon positionnement — 1024

Communiquer en champ proche
(télé-alimentation) — 930

Fin
acquisition ? — 931

1030 — Autre motif à afficher ?

Pos=Pos2
Motif=Motif2 — 1032

fin

FIGURE 10

[Fig. 11]

(a)          (b)

(c)          (d)

FIGURE 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014116235 A
- US 2013143604 A
- FR 3061333
- FR 3061333 A1